(19) **Europäisches Patentamt / European Patent Office / Office européen des brevets**

(11) **EP 4 700 432 A1**

(12) **EUROPEAN PATENT APPLICATION**
published in accordance with Art. 153(4) EPC

(43) Date of publication:
**25.02.2026 Bulletin 2026/09**

(21) Application number: **23935663.7**

(22) Date of filing: **04.05.2023**

(51) International Patent Classification (IPC):
***G01S 13/04*** *(2006.01)*

(52) Cooperative Patent Classification (CPC):
**G01S 13/04**

(86) International application number:
**PCT/CN2023/092079**

(87) International publication number:
**WO 2024/227290 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **ZHOU, Baojian**
  **Shenzhen, Guangdong 518129 (CN)**
• **LUO, Jiajin**
  **Shenzhen, Guangdong 518129 (CN)**
• **PENG, Xiaohui**
  **Shenzhen, Guangdong 518129 (CN)**
• **YU, Yang**
  **Shenzhen, Guangdong 518129 (CN)**
• **ZHANG, Ping**
  **Shenzhen, Guangdong 518129 (CN)**
• **YANG, Xun**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **TARGET SENSING METHOD**

(57)    Embodiments of the present disclosure provide a target sensing method. The method includes: sending a first pulse signal to a to-be-sensed target, where the first pulse signal is scattered by the target to generate a first echo signal, and the first echo signal is used by a receiver to determine a one-dimensional range profile of the target; receiving feedback information from the receiver, where the feedback information is generated based on the one-dimensional range profile; and sending, to the target based on the feedback information, a second pulse signal whose bandwidth is less than that of the first pulse signal, where the second pulse signal is scattered by the target to generate a second echo signal, and the second echo signal is used by the receiver to sense the target. According to embodiments of the present disclosure, an optimal frequency can be selected for detection based on features of the target, thereby improving detection performance.

FIG. 2

## Description

## TECHNICAL FIELD

Embodiments of the present disclosure mainly relate to target sensing or perception. More specifically, embodiments of the present disclosure relate to a method for sensing a range-spread target.

## BACKGROUND

Classical pulse radars model targets as point targets. In high-resolution radars, because range resolution is less than a target size, a range-spread target appears. When the range resolution is less than the target size, a range cell is less than the target size. In this case, a pulse compression result of a target echo signal is no longer a point, instead it spreads across multiple range cells.

Narrowband pulse radars use a narrowband monophonic signal whose time-domain envelope is a wide pulse. The advantages are simple signal generation, high transmit power, and good detection performance. The main disadvantage is small signal bandwidth, resulting in low range resolution. In addition, when fluctuation of an RCS radar cross section of the target occurs, the detection performance is unstable, especially for range-spread targets. Wideband pulse radars use a wideband pulse signal whose time domain envelope is a wide pulse. Specific signal forms include frequency modulated continuous wave (FMCW) signals, phase-coded signals, or other wideband signals. The advantages are high range resolution and high transmit power. The main disadvantage is that, for range-spread targets, detection performance is degraded because echo energy of the target is no longer centralized but distributed across different range cells (corresponding to scattering points of the target). In addition, wideband signal generation is more complex, posing high requirements on hardware and processing.

## SUMMARY

Embodiments of the present disclosure provide a technical solution of target sensing, and in particular, a method for sensing a range-spread target.

According to a first aspect of the present disclosure, a target sensing method is provided. The method includes: sending a first pulse signal to a to-be-sensed target, where the first pulse signal is scattered by the target to generate a first echo signal, and the first echo signal is used by a receiver to determine a one-dimensional range profile of the target; receiving feedback information from the receiver, where the feedback information is generated based on the one-dimensional range profile; and sending, to the target based on the feedback information, a second pulse signal whose bandwidth is less than that of the first pulse signal, where the second pulse signal is scattered by the target to generate a second echo signal, and the second echo signal is used by the receiver to sense the target. In this way, the receiver can provide the feedback information, so that a transmitter can determine, based on the feedback information, a target pulse signal used for target sensing, thereby improving detection-sensing performance.

In some implementations of the first aspect, the feedback information includes the one-dimensional range profile of the sensed target. In this way, the receiver can determine a target pulse signal based on the one-dimensional range profile.

In some implementations of the first aspect, determining the second signal includes: determining a preset frequency set, where the preset frequency set includes a candidate frequency for the second signal; determining, based on the one-dimensional range profile, a receive power set that is of the second signal and that corresponds to the preset frequency set; and selecting a target frequency from the preset frequency set based on the receive power set. In this way, the receiver can determine a target pulse signal from the preset frequency set.

In some implementations of the first aspect, the feedback information includes a target frequency that is in a preset frequency set and that maximizes a receive power of the second signal, and the preset frequency set includes a candidate frequency that is delivered by a transmitter to the receiver and that is for the second signal. In this way, the target frequency of the second pulse signal can be determined on a receiver side.

In some implementations of the first aspect, the first signal is a wideband pulse signal, and the second signal is a narrowband pulse signal. In this way, the one-dimensional range profile is obtained by using the wideband pulse signal, and detection-sensing performance is optimized by using the narrowband pulse signal.

In some implementations of the first aspect, the first signal is a polarized wideband pulse signal. In this way, polarization optimization is further performed on the first signal.

In some implementations of the first aspect, the feedback information includes a polarized one-dimensional range profile of the sensed target and a corresponding polarization manner. In this way, the receiver feeds back both the one-dimensional range profile and the polarization manner to the transmitter.

In some implementations of the first aspect, determining the second signal includes: determining the preset frequency set, where the preset frequency set includes the candidate frequency for the second signal; determining a polarization manner set, where the polarization manner set includes a candidate polarization manner for the second signal; determining, based on the feedback information, a receive power set that is of the second signal and that corresponds to a set of a combination of a preset frequency and the polarization manner; and selecting a target combination of the target frequency and a target polarization manner from the preset frequency set and the polarization manner set based on the receive power set. In this way, the transmitter can determine a target spectrum and the target polarization manner based on the feedback information.

In some implementations of the first aspect, the feedback information includes the target frequency that is in the preset frequency set and that maximizes the receive power of the second signal and a target polarization manner that is in a polarization manner set and that maximizes the receive power of the second signal, the preset frequency set includes the candidate frequency that is delivered by the transmitter to the receiver and that is for the second signal, and the polarization manner set includes a candidate polarization manner that is delivered by the transmitter to the receiver and that is for the second signal. In this way, the target frequency and the target polarization manner can be determined on a receiver side.

In some implementations of the first aspect, the second signal is a narrowband pulse signal that is polarized in the target polarization manner and that has the target frequency. In this way, detection-sensing performance is optimized by using the narrowband pulse signal that is polarized in the target polarization manner and that has the target frequency.

According to a second aspect of the present disclosure, a target sensing method is provided. The method includes: determining a one-dimensional range profile of a to-be-sensed target based on a first echo signal generated by scattering a first pulse signal by the target, where the first pulse signal is sent by a transmitter; sending feedback information to the transmitter, where the feedback information is generated based on the one-dimensional range profile; and sensing the target based on a second echo signal generated by the target by scattering a second pulse signal sent by the transmitter, where a bandwidth of the second pulse signal is less than that of the first pulse signal. In this way, a receiver can send the feedback information and optimize detection-sensing performance based on the second echo signal.

In some embodiments of the second aspect, the method further includes: performing pulse compression on the first signal. In this way, the obtained one-dimensional range profile can be optimized.

In some embodiments of the second aspect, the feedback information includes the one-dimensional range profile of the sensed target. In this way, a receiver feeds back the one-dimensional range profile to the transmitter.

In some embodiments of the second aspect, the feedback information includes a target frequency that is in a preset frequency set and that maximizes a receive power of the second signal, and the preset frequency set includes a candidate frequency that is received from the transmitter and that is for the second signal. In this way, a receiver determines the target frequency and feeds back the target frequency to the transmitter.

In some embodiments of the second aspect, the first signal is a wideband pulse signal, and the second signal is a narrowband pulse signal. In this way, the one-dimensional range profile is obtained by using the wideband pulse signal, and detection-sensing performance is optimized by using the narrowband pulse signal.

In some embodiments of the second aspect, the first signal is a polarized wideband pulse signal. In this way, a receiver can obtain a polarization manner of the first signal.

In some embodiments of the second aspect, the feedback information includes a polarized one-dimensional range profile of the sensed target and a corresponding polarization manner. In this way, a receiver feeds back the one-dimensional range profile and the polarization manner to the transmitter.

In some embodiments of the second aspect, the feedback information includes the target frequency that is in the preset frequency set and that maximizes the receive power of the second signal and a target polarization manner that is in a polarization manner set and that maximizes the receive power of the second signal, the preset frequency set includes the candidate frequency that is received by a receiver from the transmitter and that is for the second signal, and the polarization manner set includes a candidate polarization manner that is received by the receiver from the transmitter and that is for the second signal. In this way, the receiver feeds back a target spectrum and the target polarization manner to the transmitter.

According to a third aspect of the present disclosure, an electronic device is provided. The electronic device includes at least one computing unit and at least one memory. The at least one memory is coupled to the at least one computing unit and stores instructions for execution by the at least one computing unit. When the instructions are executed by the at least one computing unit, the device is enabled to perform the method according to the first aspect and the second aspect.

According to a fourth aspect of the present disclosure, a computer-readable storage medium is provided. The computer-readable storage medium stores a computer program, and when the program is executed by a processor, the method according to the first aspect and the second aspect is implemented.

According to a fifth aspect of the present disclosure, a computer program product is provided. The computer program product includes computer-executable instructions. When the computer-executable instructions are executed by a processor, a device is enabled to perform the method according to the first aspect and the second aspect.

## BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.

FIG. 1 is a diagram of an example environment in which multiple embodiments of the present disclosure can be implemented;

FIG. 2 is a diagram of a target detection-sensing process according to some embodiments of the present disclosure;

FIG. 3 is a diagram of a pulse signal sending process according to some embodiments of the present disclosure;

FIG. 4 is a diagram of another target detection-sensing process according to some embodiments of the present disclosure;

FIG. 5 is a diagram of still another target detection-sensing process according to some embodiments of the present disclosure;

FIG. 6 is a diagram of yet another target detection-sensing process according to some embodiments of the present disclosure;

FIG. 7 is a diagram of yet another target detection-sensing process according to some embodiments of the present disclosure;

FIG. 8 is a diagram of a simulation result of an RCS changing with a view angle according to some embodiments of the present disclosure;

FIG. 9 is another diagram of a simulation result of an RCS changing with a view angle according to some embodiments of the present disclosure;

FIG. 10 is a flowchart of a target sensing method according to some embodiments of the present disclosure;

FIG. 11 is a flowchart of another target sensing method according to some embodiments of the present disclosure; and

FIG. 12 is a block diagram of an electronic device capable of implementing multiple embodiments of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Range resolution (range resolution) is an indicator that measures a capability of a radar system or a sensing system to distinguish between targets in a range dimension. The range resolution is defined as a minimum range between two targets that can be distinguished by the system. The range resolution is related to a transmission speed and a bandwidth of a signal. For a monostatic system (that is, in a case of self-sending and self-receiving), if a propagation speed of a signal is c and a bandwidth of the signal is B, range resolution is $\Delta R=c/2B$. It can be learned that a larger bandwidth of the signal indicates higher (that is, less or better) range resolution. A range corresponding to the range resolution is referred to as a range resolution cell, or simply a range cell. In the radar or sensing system, a value of each range cell is determined by a result of pulse compression (pulse compression) of an echo signal.

A one-dimensional range profile (range profile) is a profile of a target formed by the radar system or the sensing system in the range dimension. Not all systems can generate a meaningful one-dimensional range profile for any target. When the bandwidth is small or a target size is small, because the range resolution is greater than the target size, in other words, the range cell is greater than the target size, a pulse compression result of the target occupies only one range cell. In this case, the target is a point in a profiling result, that is, a point target. A classical pulse radar models a target as a point target. However, in a high-resolution radar, because range resolution is less than a target size, a range-spread target appears. When the range resolution is less than the target size, a range cell is less than the target size. In this case, a pulse compression result of a target echo signal is no longer a point, instead it spreads across multiple range cells. Different range cells correspond to different scattering points on the target. In this case, the pulse compression result is a one-dimensional range profile of the target.

A radar cross-section (RCS) indicates a target's ability of reflecting signals, and is expressed in dBm^2. The RCS is an attribute of the target, and is subject to its size, material, shape, posture, frequency, polarization, and the like. A size of the RCS affects a power of a received signal, and further affects SNR and detection performance. A target with a larger RCS is more likely to be detected. An RCS fluctuation (RCS fluctuation) refers to variations in RCS that occurs as the target rotates relative to the radar. The magnitude of RCS fluctuation can reach tens of decibels. The cause of these fluctuations is that a relative range of scattering points on the target changes as a relative orientation of the target and the radar changes. This leads to variations on a relative phase of signals reflected by the scattering points. The reflected signals are enhanced after some orientations are superimposed, and canceled after other orientations are superimposed. The RCS fluctuation makes it more difficult to detect or continuously track the target. In principle, the RCS fluctuation may occur when changes of a relative range of different scattering points on the target reaches a signal wavelength. Generally, for the range-spread target, there is an RCS fluctuation phenomenon.

As mentioned above, for the range-spread target, a conventional sensing method has a problem of limited detection performance. Due to a distribution feature of a scattering body of the range-spread target, echo energy is not concentrated when a wideband signal is used for detection, or the RCS fluctuation occurs when a narrowband signal is used for detection. Both of the effects result in degradation of the detection performance.

In view of this, various embodiments of the present disclosure provide a target detection-sensing method. The following describes various example embodiments of the present disclosure with reference to the accompanying drawings.

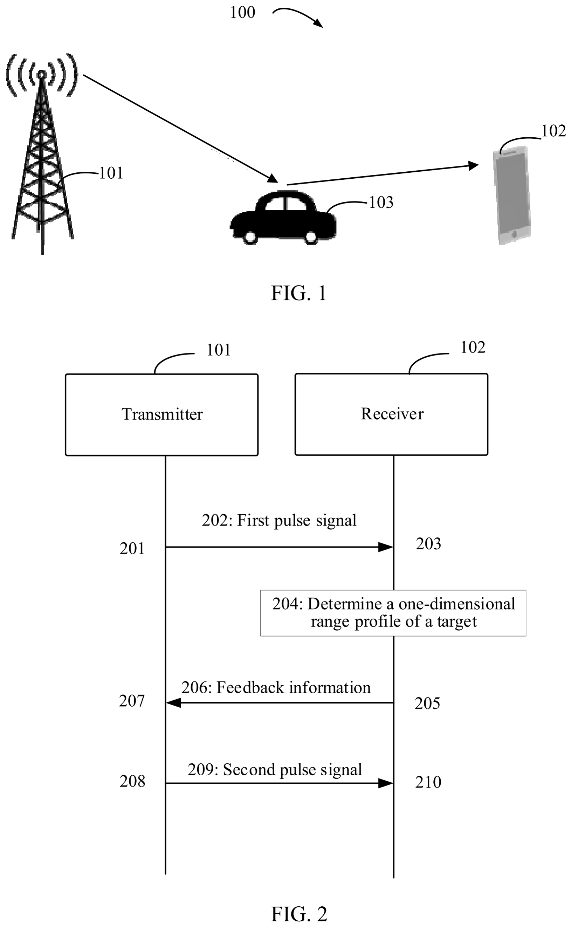

FIG. 1 is a diagram of an example environment in which multiple embodiments of the present disclosure can be implemented. As shown in FIG. 1, the example environment includes a transmitter (TX) 101, a receiver (RX) 102, and a to-be-sensed target 103.

The transmitter 101 may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The transmitter may be a macro base station, a micro base station, an indoor base station, a relay node, or a donor node. Optionally, the transmitter may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the transmitter in this application may alternatively be implemented by using a software function running on hardware, or may be implemented by using a virtualization function instantiated on a platform (for example, a cloud platform). Alternatively, the transmitter in this application may be a logical node, a logical module, or software that can implement all or some functions of the transmitter. The base station is used as an example for illustration herein. A device form of the transmitter is not limited in embodiments of this application.

The receiver 102 may be a terminal device, user equipment (user equipment, UE), a mobile station, a mobile terminal, or the like. The receiver may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality , industrial control, self-driving, telemedicine, smart grid, smart furniture, smart office, smart wearable, smart transportation, and smart city. The receiver may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. The mobile phone is used as an example for illustration herein. A device form of the receiver is not limited in embodiments of this application.

The to-be-sensed target 103 is usually a target that is not recognized or classified in target detection and recognition, for example, an unmarked pedestrian, a vehicle of an unknown type, or a hidden object. These targets may appear in a complex environment, for example, bad weather, insufficient illumination, or cluttered background, and it may be difficult to accurately detect and recognize features of the targets. Detection and recognition of the to-be-sensed target is an important challenge in the field of target detection and recognition, and needs to be solved by using advanced radar sensing technologies, computer vision, machine learning, and deep learning technologies. The to-be-sensed target can be detected and recognized more accurately and robustly, thereby improving performance and reliability in fields such as self-driving, intelligent security protection, and environment monitoring. A car is used as an example for illustration herein. A type of the to-be-sensed target is not limited in embodiments of this application.

FIG. 2 is a diagram of a target detection-sensing process according to some embodiments of the present disclosure. As shown in FIG. 2, a transmitter 101 sends 201 a first pulse signal 202 to a to-be-sensed target 103. The first pulse signal is scattered by the target to generate a first echo signal. The first echo signal is used by a receiver 102 to determine 204 a one-dimensional range profile of the sensed target 103. Then, the transmitter 101 receives 207 feedback information 206 from the receiver 102. The feedback information is generated based on the one-dimensional range profile. In addition, the transmitter 101 sends 208, to the target 103 based on the feedback information, a second pulse signal 209 whose bandwidth is less than that of the first pulse signal. The second pulse signal is scattered by the target 103 to generate a second echo signal. The second echo signal is used by the receiver 102 to sense the target 103.

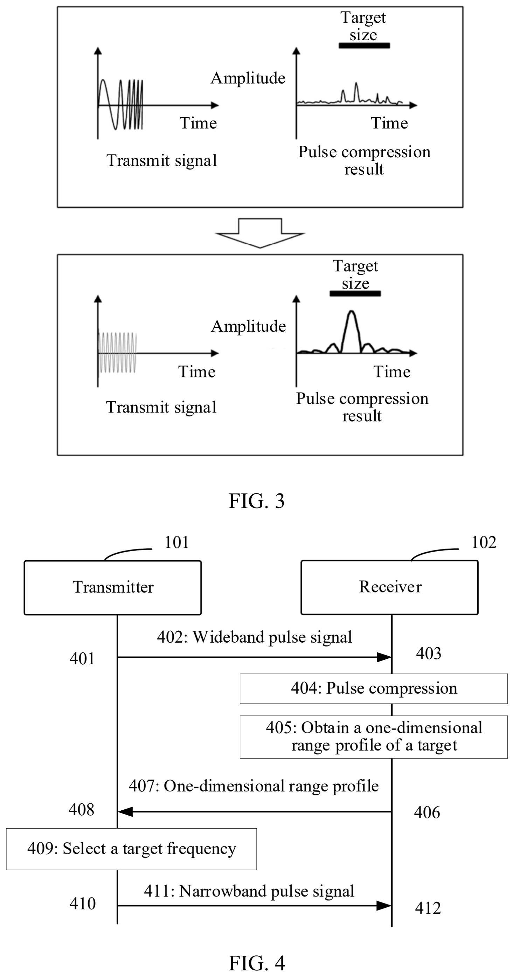

FIG. 3 is a diagram of a pulse signal sending process according to some embodiments of the present disclosure. As shown in FIG. 3, a transmitter first sends a wideband pulse signal. Wideband pulse radars use a wideband pulse signal whose time domain envelope is a wide pulse. Specific signal forms include frequency modulated continuous wave (FMCW) signals, phase-coded signals, or other wideband signals. The advantages are high range resolution and high transmit power. The main disadvantage is that, for range-spread targets, detection performance is degraded because echo energy of the target is no longer centralized but distributed across different range cells (corresponding to scattering points of the target). In addition, wideband signal generation is complex, posing high requirements on hardware and processing. In FIG. 3, the wideband pulse signal is first sent, to enable a receiver to obtain a one-dimensional range profile of the target, so that the receiver sends feedback information to the transmitter based on the one-dimensional range profile.

As shown in FIG. 3, after receiving the feedback from the receiver, the transmitter selects a target frequency of a narrowband signal, for example, an optimal frequency that can maximize a receive power of the narrowband signal. Narrowband pulse radars use a narrowband monophonic signal whose time domain envelope is a wide pulse. The advantages are simple signal generation, high transmit power, and good detection performance. The main disadvantage is small signal bandwidth, resulting in low range resolution. In addition, when fluctuation of an RCS of the target occurs, the detection performance is unstable, especially for the range-spread target. In FIG. 3, the narrowband signal with the target frequency is selected and sent, so that the target can be detected and tracked, and a target sensing result is optimized.

As shown in FIG. 3, in the foregoing method, a first pulse signal is first sent to obtain the one-dimensional range profile of the target, then a second pulse signal whose bandwidth is less than that of the first pulse signal is selected based on the range profile, and finally the second pulse signal whose bandwidth is narrower is sent for detection. This method can improve the detection performance for the-range spread target. In addition, in a target tracking scenario, continuous use of the first pulse signal with a wider bandwidth is avoided, and frequency domain resource occupation can be reduced.

FIG. 4 is a diagram of another target detection-sensing process according to some embodiments of the present disclosure. As shown in FIG. 4, a transmitter 101 sends 401 a wideband pulse signal 402, and a receiver 102 receives 403 an echo signal through scattering by a target 103. In some embodiments, the receiver 102 performs pulse compression 404 on the signal. The receiver 102 obtains 405 a one-dimensional range profile of the target 103. For example, the one-dimensional range profile includes a 2-tuple $\{\sigma_i, \tau_i\}$, $i = 1,2, \cdots , M$ including a complex number response and a delay.

In some embodiments, the receiver 102 sends feedback information to the transmitter 101. The feedback information includes the one-dimensional range profile of the sensed target 103. As shown in FIG. 4, the receiver 102 sends 406 the one-dimensional range profile 407 to the transmitter 101. The transmitter 101 receives 408 the one-dimensional range profile 407.

In some embodiments, the transmitter 101 determines a preset frequency set. The preset frequency set includes a candidate frequency for a second signal. The transmitter 101 determines, based on the one-dimensional range profile, a receive power set that is of the second signal and that corresponds to the preset frequency set, and selects a target frequency from the preset frequency set based on the receive power set. As shown in FIG. 3, the transmitter 101 selects 409 the target frequency based on the one-dimensional range profile. In some embodiments, the transmitter 102 selects a target frequency (for example, an optimal frequency) $f^\star \in \mathcal{F}$ from a preset frequency set $\mathcal{F}$ according to the following criteria, where

$$f^\star = \max_{f \in \mathcal{F}} \left| \sum_i \sigma_i e^{-j2\pi f \tau_i} \right|$$
. The transmitter 101 sends 410 a narrowband pulse signal 411 whose frequency is $f^\star$. The receiver 102 receives 412 the narrowband pulse signal through scattering by the target 103, and senses the target 103 based on the narrowband pulse signal.

The foregoing sensing method improves detection performance for a range-spread target. Compared with narrowband signal detection, the foregoing method can avoid a problem of unstable detection performance caused by an RCS fluctuation. Compared with wideband signal detection, the foregoing method can avoid a problem of an SNR loss caused by distribution of echo energy in multiple range cells. In addition, in a target tracking scenario, continuous use of the wideband signal is avoided, and frequency domain resource occupation can be reduced. Instead of using only the wideband signal or the narrowband signal, the wideband signal is first sent to obtain the one-dimensional range profile of the target, then an optimal frequency that maximizes a receive power is selected based on the range profile, and finally a narrowband signal with the optimal frequency is sent for detection.

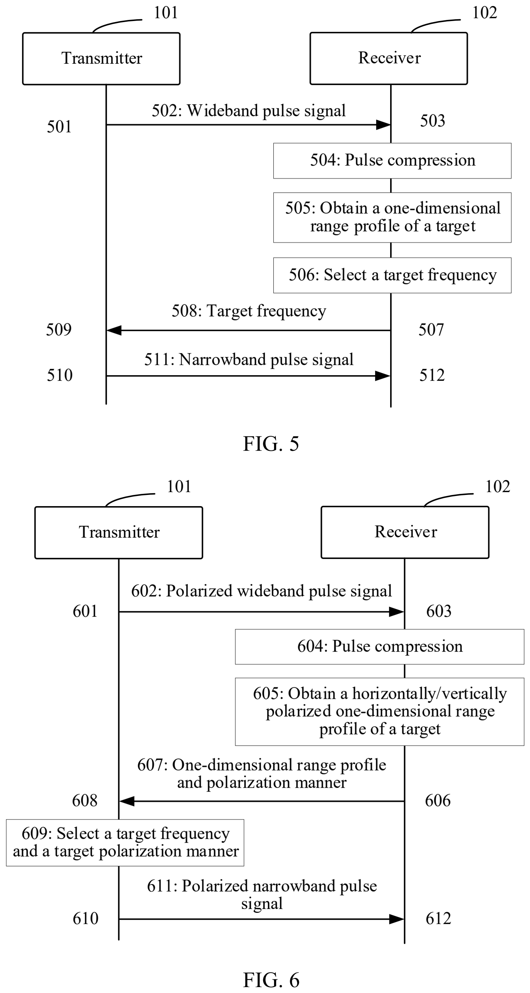

FIG. 5 is a diagram of still another target detection-sensing process according to some embodiments of the present disclosure. As shown in FIG. 5, a transmitter 101 sends 501 a wideband pulse signal 502, and a receiver 102 receives 503 an echo signal through scattering by a target. In some embodiments, the receiver 102 performs pulse compression 504 on the signal. The receiver 102 obtains 505 a one-dimensional range profile of the target 103. For example, the one-dimensional range profile includes a 2-tuple $\{\sigma_i, \tau_i\}$, $i = 1,2, \cdots , M$ including a complex number response and a delay.

In some embodiments, the receiver 102 sends feedback information to the transmitter 101. The feedback information includes a target frequency that is in a preset frequency set and that maximizes a receive power of a second signal, and the preset frequency set includes a candidate frequency that is received from the transmitter and that is for the second signal. As shown in FIG. 5, in some embodiments, the receiver 102 selects 506, according to the following criteria from a frequency set $\mathcal{F}$ delivered or preset by the transmitter 101, a target frequency (for example, an optimal frequency) $f^\star \in \mathcal{F}$ that maximizes the power, where $f^\star = \max\limits_{f \in \mathcal{F}} \left| \sum_i \sigma_i e^{-j2\pi f \tau_i} \right|$ . The receiver 102 sends 507 the target frequency $f^\star$ 508 to the transmitter 101. The transmitter 101 receives 509 the target frequency. The transmitter 101 sends 510 a narrowband pulse signal 511 whose frequency is $f^\star$. The receiver 102 receives 512 the narrowband pulse signal through scattering by the target, and senses the target 103 based on the narrowband pulse signal. In the foregoing method, the receiver calculates and feeds back the optimal frequency, so that feedback overheads between receiving and sending can be reduced.

FIG. 6 is a diagram of yet another target detection-sensing process according to some embodiments of the present disclosure. As shown in FIG. 6, a transmitter 101 sends 601 a polarized wideband pulse signal 602, and a receiver 102 receives 603 an echo signal through scattering by a target. In some embodiments, the receiver 102 performs pulse compression 604 on the signal. The receiver 102 obtains 605 a horizontally/vertically polarized one-dimensional range profile of the target 103. For example, the one-dimensional range profile includes a 2-tuple $\{\sigma_i, \tau_i\}$, $i = 1,2, \cdots , M$ including a complex number response and a delay.

In some embodiments, the receiver 102 sends feedback information to the transmitter 101. The feedback information includes a polarized one-dimensional range profile of the sensed target and a corresponding polarization manner. As shown in FIG. 6, the receiver 102 sends 606 a one-dimensional range profile $\{\sigma_i, \tau_i\}_p$ and a polarization manner p 607 to the transmitter 101. The transmitter 101 receives 608 the one-dimensional range profile $\{\sigma_i, \tau_i\}_p$ and the polarization manner p 607. The transmitter 101 selects 609 a target frequency and a target polarization manner based on the one-dimensional range profile.

In some embodiments, the transmitter 101 determines a preset frequency set. The preset frequency set includes a candidate frequency for a second signal. The transmitter 101 determines a polarization manner set. The polarization manner set includes a candidate polarization manner for the second signal. The transmitter 101 determines, based on the feedback information, a receive power set that is of the second signal and that corresponds to a set of a combination of a preset frequency and the polarization manner, and selects a target combination of the target frequency and the target polarization manner from the preset frequency set and the polarization manner set based on the receive power set. As shown in FIG. 5, the transmitter 102 selects a target frequency (for example, an optimal frequency) $f^\star \in \mathcal{F}$ and a target polarization manner (for example, an optimal polarization manner) $p^* \in \mathcal{P}$ from a preset frequency set $\mathcal{F}$ and a polarization manner set $\mathcal{P}$ according to the following criteria, where $\{f^\star, p^\star\} = \max\limits_{f \in \mathcal{F}, p \in \mathcal{P}} \left| \sum_i \sigma_i e^{-j2\pi f \tau_i} \right|$ . The transmitter 101 sends 610 a narrowband pulse signal 611 whose frequency is $f^\star$ and polarization is p*. The receiver 102 receives 612 the narrowband pulse signal through scattering by the target 103, and senses the target 103 based on the narrowband pulse signal. In the foregoing method, a signal polarization dimension is considered, and detection performance can be improved.

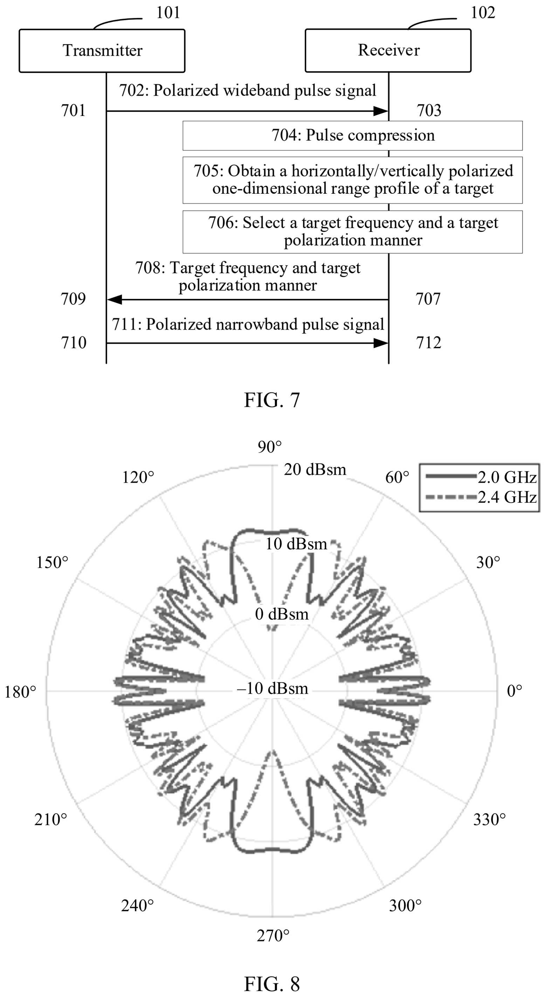

FIG. 7 is a diagram of yet another target detection-sensing process according to some embodiments of the present disclosure. As shown in FIG. 7, a transmitter 101 sends 701 a polarized wideband pulse signal 702, and a receiver 102 receives 703 an echo signal through scattering by a target. In some embodiments, the receiver 102 performs pulse compression 704 on the signal. The receiver 102 obtains 705 a horizontally/vertically polarized one-dimensional range profile of the target 103. For example, the one-dimensional range profile includes a 2-tuple $\{\sigma_i, \tau_i\}$, $i = 1,2, \cdots , M$ including a complex number response and a delay.

In some embodiments, the receiver 102 sends feedback information to the transmitter 101. The feedback information includes a target frequency that is in a preset frequency set and that maximizes a receive power of a second signal and a target polarization manner that is in a polarization manner set and that maximizes the receive power of the second signal, the preset frequency set includes a candidate frequency that is delivered by the transmitter 101 to the receiver 102 and that is for the second signal, and the polarization manner set includes a candidate polarization manner that is delivered by the transmitter 101 to the receiver 102 and that is for the second signal. As shown in FIG. 7, in some embodiments, the receiver 102 selects 706 a target frequency (for example, an optimal frequency) $f^\star \in \mathcal{F}$ and a target polarization manner (for example, an optimal polarization manner) $p^* \in \mathcal{P}$ according to the following criteria from a frequency set $\mathcal{F}$ and a polarization manner set $\mathcal{P}$ delivered or preset by the transmitter 101, where $\{f^\star, p^\star\} = \max\limits_{f \in \mathcal{F}, p \in \mathcal{P}} \left| \sum_i \sigma_i e^{-j2\pi f \tau_i} \right|$ . The receiver 102 sends 707 the target frequency $f^\star$ and the target polarization manner p* 708 to the transmitter 101. The transmitter 101 receives 709 the target frequency $f^\star$ and the target polarization manner p*. The transmitter 101 sends a narrowband pulse signal 711 whose frequency is $f^\star$ and polarization is p*. The receiver 102 receives 712 the narrowband pulse signal through scattering by the target 103, and senses the target 103 based on the narrowband pulse signal. In the foregoing method, a signal polarization dimension is considered, and detection performance can be improved.

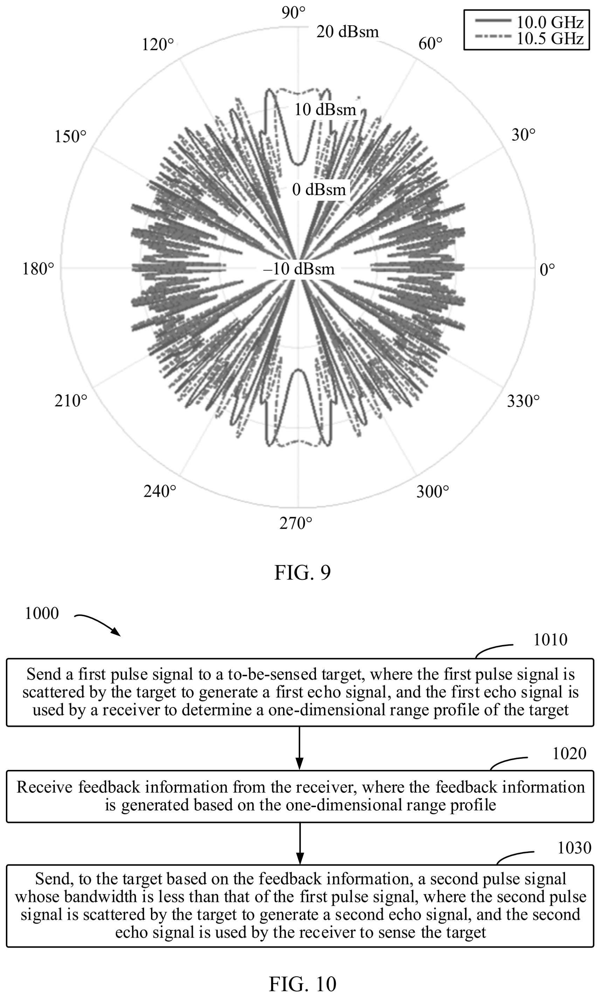

FIG. 8 is a diagram of a simulation result of an RCS changing with a view angle according to some embodiments of the present disclosure. FIG. 9 is another diagram of a simulation result of an RCS changing with a view angle according to some embodiments of the present disclosure. Specifically, a simulation condition in FIG. 8 is a signal frequency of 2.0 GHz/2.4 GHz and a far-field condition, and a simulation condition in FIG. 9 is a signal frequency of 10.0 GHz/10.5 GHz and a far-field condition. As shown in FIG. 8 and FIG. 9, regardless of whether the simulation condition is a frequency band of 2 GHz or a frequency band of 10 GHz, an RCS of a range-spread target fluctuates sharply with a change of a view angle. This causes detection performance for the target to be degraded sharply at some view angles or degraded sharply as the target moves. However, in different frequencies, curves of RCS fluctuations vary with the view angle. Therefore, an optimal frequency (and a polarization manner) may be selected based on a feature of the target to perform detection, to improve the detection performance. This reflects potential beneficial effects of technical solutions of this application.

FIG. 10 is a flowchart of a target sensing method according to some embodiments of the present disclosure.

At block 1010, a first pulse signal is sent to a to-be-sensed target, where the first pulse signal is scattered by the target to generate a first echo signal, and the first echo signal is used by a receiver to determine a one-dimensional range profile of the target.

At block 1020, feedback information is received from the receiver, where the feedback information is generated based on the one-dimensional range profile.

At block 1030, a second pulse signal whose bandwidth is less than that of the first pulse signal is sent to the target based on the feedback information, where the second pulse signal is scattered by the target to generate a second echo signal, and the second echo signal is used by the receiver to sense the target.

In this way, the receiver can provide the feedback information, so that a transmitter can determine, based on the feedback information, a target pulse signal used for target sensing, thereby improving detection-sensing performance.

In some implementations, the feedback information includes the one-dimensional range profile of the sensed target. In this way, the receiver can determine a target pulse signal based on the one-dimensional range profile.

In some implementations, determining the second signal includes: determining a preset frequency set, where the preset frequency set includes a candidate frequency for the second signal; determining, based on the one-dimensional range profile, a receive power set that is of the second signal that corresponds to the preset frequency set; and selecting a target frequency from the preset frequency set based on the receive power set. In this way, the receiver can determine a target pulse signal from the preset frequency set.

In some implementations, the feedback information includes a target frequency that is in a preset frequency set and that maximizes a receive power of the second signal, and the preset frequency set includes a candidate frequency that is delivered by a transmitter to the receiver and that is for the second signal. In this way, the target frequency of the second pulse signal can be determined on a receiver side.

In some implementations, the first signal is a wideband pulse signal, and the second signal is a narrowband pulse signal. In this way, the one-dimensional range profile is obtained by using the wideband pulse signal, and detection-sensing performance is optimized by using the narrowband pulse signal.

In some implementations, the first signal is a polarized wideband pulse signal. In this way, polarization optimization is further performed on the first signal.

In some implementations, the feedback information includes a polarized one-dimensional range profile of the sensed target and a corresponding polarization manner. In this way, the receiver feeds back both the one-dimensional range profile and the polarization manner to the transmitter.

In some implementations, determining the second signal includes: determining the preset frequency set, where the preset frequency set includes the candidate frequency for the second signal; determining a polarization manner set, where the polarization manner set includes a candidate polarization manner for the second signal; determining, based on the feedback information, a receive power set that is of the second signal and that corresponds to a set of a combination of a preset frequency and the polarization manner; and selecting a target combination of the target frequency and a target polarization manner from the preset frequency set and the polarization manner set based on the receive power set. In this way, the transmitter can determine a target spectrum and the target polarization manner based on the feedback information.

In some implementations, the feedback information includes the target frequency that is in the preset frequency set and that maximizes the receive power of the second signal and a target polarization manner that is in a polarization manner set and that maximizes the receive power of the second signal, the preset frequency set includes the candidate frequency that is delivered by the transmitter to the receiver and that is for the second signal, and the polarization manner set includes a candidate polarization manner that is delivered by the transmitter to the receiver and that is for the second signal. In this way, the target frequency and the target polarization manner can be determined on a receiver side.

In some implementations, the second signal is a narrowband pulse signal that is polarized in the target polarization manner and that has the target frequency. In this way, detection-sensing performance is optimized by using the narrowband pulse signal that is polarized in the target polarization manner and that has the target frequency.

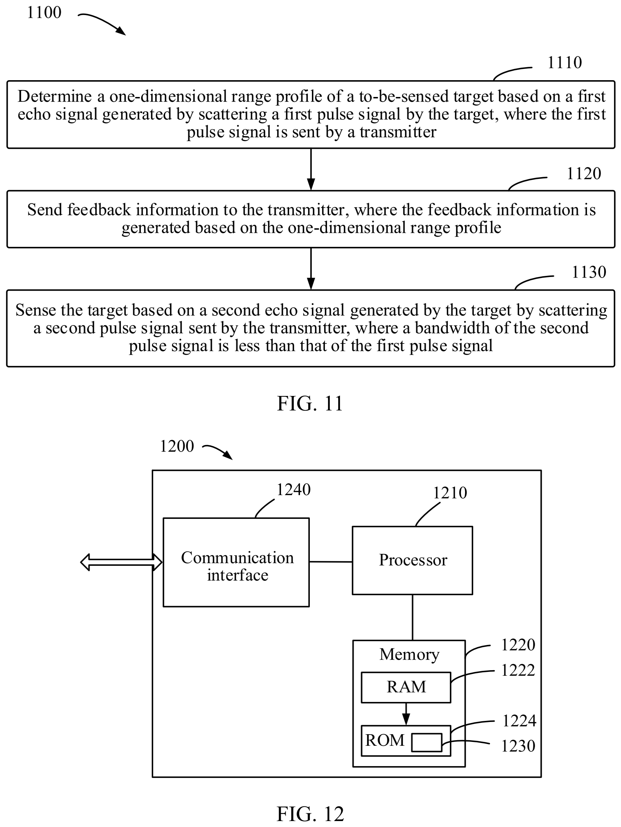

FIG. 11 is a flowchart of another target sensing method according to some embodiments of the present disclosure.

At block 1110, a one-dimensional range profile of a to-be-sensed target is determined based on a first echo signal generated by scattering a first pulse signal by the target, where the first pulse signal is sent by a transmitter.

At block 1120, feedback information is sent to the transmitter, where the feedback information is generated based on the one-dimensional range profile.

At block 1130, the target is sensed based on a second echo signal generated by the target by scattering a second pulse signal sent by the transmitter, where a bandwidth of the second pulse signal is less than that of the first pulse signal.

In this way, a receiver can send the feedback information and optimize detection-sensing performance based on the second echo signal.

In some embodiments, performing pulse compression on the first signal is further included. In this way, the obtained one-dimensional range profile can be optimized.

In some embodiments, the feedback information includes the one-dimensional range profile of the sensed target. In this way, a receiver feeds back the one-dimensional range profile to the transmitter.

In some embodiments, the feedback information includes a target frequency that is in a preset frequency set and that maximizes a receive power of the second signal, and the preset frequency set includes a candidate frequency that is received from the transmitter and that is for the second signal. In this way, a receiver determines the target frequency and feeds back the target frequency to the transmitter.

In some embodiments, the first signal is a wideband pulse signal, and the second signal is a narrowband pulse signal. In this way, the one-dimensional range profile is obtained by using the wideband pulse signal, and detection-sensing performance is optimized by using the narrowband pulse signal.

In some embodiments, the first signal is a polarized wideband pulse signal. In this way, a receiver can obtain a polarization manner of the first signal.

In some embodiments, the feedback information includes a polarized one-dimensional range profile of the sensed target and a corresponding polarization manner. In this way, a receiver feeds back the one-dimensional range profile and the polarization manner to the transmitter.

In some embodiments, the feedback information includes the target frequency that is in the preset frequency set and that maximizes the receive power of the second signal and a target polarization manner that is in a polarization manner set and that maximizes the receive power of the second signal, the preset frequency set includes the candidate frequency that is received by a receiver from the transmitter and that is for the second signal, and the polarization manner set includes a candidate polarization manner that is received by the receiver from the transmitter and that is for the second signal. In this way, the receiver feeds back a target spectrum and the target polarization manner to the transmitter.

FIG. 12 is a block diagram of an electronic device 1200 capable of implementing multiple embodiments of the present disclosure. The device 1200 may be configured to implement the transmitter 101 and the receiver 102 shown in FIG. 1. As shown in FIG. 12, the device 1200 includes one or more processors (or processing units) 1210, may further include one or more memories 1220 coupled to the processor 1210, and may further include a communication interface 1240 coupled to the processor 1210.

The communication interface 1240 may be configured to communicate with another device or apparatus, for example, send or receive data and/or a signal. The communication interface 1240 may have at least one communication interface for communication. The communication interface may include any interface necessary for communicating with another device. For example, a communication interface may be a transceiver, a circuit, a bus, a module, or another type of communication interface.

The processor 1210 may include but is not limited to at least one of the following: a general-purpose computer, a dedicated computer, a microcontroller, a digital signal controller (Digital Signal Processor, DSP), or controller-based multi-core controller architectures. The device 1200 may have multiple processors, for example, application-specific integrated circuit chips, which in time belong to a clock synchronized with a main processor.

The memory 1220 may include one or more non-volatile memories and one or more volatile memories. An example of the non-volatile memory includes but is not limited to at least one of the following: a read-only memory (Read-Only Memory, ROM) 1224, an erasable programmable read-only memory (Electrically Programmable Read-Only Memory, EPROM), a flash memory, a hard disk drive, a compact disc (Compact Disc, CD), a digital video disk (Digital Video Disk, DVD), or another magnetic storage and/or optical storage. An example of the volatile memory includes but is not limited to at least one of the following: a random access memory (Random Access Memory, RAM) 1222, or another volatile memory that does not last for power-off duration.

A computer program 1230 includes computer executable instructions executed by an associated processor 1210. The program 1230 may be stored in the ROM 1220. The processor 1210 may perform any suitable action and processing by loading the program 1230 into the RAM 1220.

Possible implementations of this application may be implemented by using the program 1230, so that the device 1200 can perform any process discussed with reference to FIG. 10 and FIG. 11. A possible implementation of this application may alternatively be implemented by hardware or a combination of software and hardware.

In some implementations, the program 1230 may be tangibly included in a computer-readable medium, and the computer-readable medium may be included in the device 1200 (for example, in the memory 820) or another storage device that can be accessed by the device 1200. The program 1230 may be loaded from the computer-readable medium into the RAM 1222 for execution. The computer-readable medium may include any type of tangible non-volatile memory, for example, a ROM, an EPROM, a flash memory, a hard disk drive, a CD, or a DVD.

It should be noted that the foregoing embodiments are some implementations provided in this application, and are merely intended to describe the technical solutions of this application more clearly, but do not constitute a limitation on another embodiment of this application. In another embodiment, more or fewer procedures or steps, more or fewer components, more or fewer service functions, different scheduling policies, and the like may be further included. This is not limited herein. A person of ordinary skill in the art may learn that with evolution of a network architecture and emergence of a new service scenario, the technical solutions provided in this application are also applicable to resolving a similar technical problem.

Embodiments of this application further provide a chip. The chip may include an input interface, an output interface, and a processing circuit. In embodiments of the present disclosure, the input interface and the output interface may complete signaling or data interaction, and the processing circuit may complete generation and processing of signaling or data information.

Embodiments of this application further provide a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

Embodiments of this application further provide a processor, configured to be coupled to a memory. The memory stores instructions. When the processor runs the instructions, the processor is enabled to perform the method and function in any one of the foregoing embodiments.

Embodiments of this application further provide a computer-readable storage medium. The computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. The computer-readable storage medium may be any usable medium accessible by a computer, or a data storage device, like a server or a data center, integrating one or more usable medium. More detailed examples of the computer-readable storage medium include an electrical connection with one or more wires, a magnetic medium (for example, a magnetic disk, a floppy disk, a hard disk drive, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by using software, hardware, firmware, or any combination thereof. When software is used to implement embodiments, all or some of embodiments may be implemented in a form of a computer program product. Embodiments of this application further provide at least one computer program product that is tangibly stored on a non-transitory computer-readable storage medium. The computer program product includes one or more computer-executable instructions, for example, instructions included in a program module, and the instructions are executed in a device on a target real or virtual processor, to perform the process, the method, and the function in any one of the foregoing embodiments. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

According to the methods provided in embodiments of this application, this application further provides a computer program product. The computer program product includes computer program code. When the computer program code is run on a computer, the computer is enabled to perform a process, a method, and a function in the foregoing embodiments. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method disclosed in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server. In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of the present disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The foregoing has described various implementations of the present disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined to achieve different technical effects. Various combinations are not listed in embodiments of this application.

In addition, although the operations of the methods in the present disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, multiple steps may be combined into one step for execution, and/or one step may be broken down into multiple steps for execution. It should further be noted that, the features and functions of two or more apparatuses according to the present disclosure may be specific in one apparatus. Instead, features and functions of one apparatus described above may be further specific in multiple apparatuses.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

**Claims**

1. A target sensing method, comprising:

sending a first pulse signal to a to-be-sensed target, wherein the first pulse signal is scattered by the target to generate a first echo signal, and the first echo signal is used by a receiver to determine a one-dimensional range profile of the target;
receiving feedback information from the receiver, wherein the feedback information is generated based on the one-dimensional range profile; and
sending, to the target based on the feedback information, a second pulse signal whose bandwidth is less than that of the first pulse signal, wherein the second pulse signal is scattered by the target to generate a second echo signal, and the second echo signal is used by the receiver to sense the target.

2. The method according to claim 1, wherein the feedback information comprises the one-dimensional range profile of the sensed target.

3. The method according to claim 2, wherein determining the second signal comprises:

determining a preset frequency set, wherein the preset frequency set comprises a candidate frequency for the second signal;
determining, based on the one-dimensional range profile, a receive power set that is of the second signal and that corresponds to the preset frequency set; and
selecting a target frequency from the preset frequency set based on the receive power set.

4. The method according to claim 1, wherein the feedback information comprises a target frequency that is in a preset frequency set and that maximizes a receive power of the second signal, and the preset frequency set comprises a candidate frequency that is delivered by a transmitter to the receiver and that is for the second signal.

5. The method according to any one of claims 1 to 4, wherein

the first signal is a wideband pulse signal; and
the second signal is a narrowband pulse signal.

6. The method according to claim 5, wherein the first signal is a polarized wideband pulse signal.

7. The method according to claim 6, wherein the feedback information comprises a polarized one-dimensional range profile of the sensed target and a corresponding polarization manner.

8. The method according to claim 7, wherein determining the second signal comprises:

determining the preset frequency set, wherein the preset frequency set comprises the candidate frequency for the second signal;
determining a polarization manner set, wherein the polarization manner set comprises a candidate polarization manner for the second signal;
determining, based on the feedback information, a receive power set that is of the second signal and that corresponds to a set of a combination of a preset frequency and the polarization manner; and
selecting a target combination of the target frequency and a target polarization manner from the preset frequency set and the polarization manner set based on the receive power set.

9. The method according to claim 6, wherein the feedback information comprises the target frequency that is in the preset frequency set and that maximizes the receive power of the second signal and a target polarization manner that is in a polarization manner set and that maximizes the receive power of the second signal, the preset frequency set comprises the candidate frequency that is delivered by the transmitter to the receiver and that is for the second signal, and the polarization manner set comprises a candidate polarization manner that is delivered by the transmitter to the receiver and that is for the second signal.

10. The method according to claim 8 or 9, wherein the second signal is a narrowband pulse signal that is polarized in the target polarization manner and that has the target frequency.

11. A target sensing method, comprising:

determining a one-dimensional range profile of a to-be-sensed target based on a first echo signal generated by scattering a first pulse signal by the target, wherein the first pulse signal is sent by a transmitter;
sending feedback information to the transmitter, wherein the feedback information is generated based on the one-dimensional range profile; and
sensing the target based on a second echo signal generated by the target by scattering a second pulse signal sent by the transmitter, wherein a bandwidth of the second pulse signal is less than that of the first pulse signal.

12. The method according to claim 11, further comprising:
performing pulse compression on the first signal.

13. The method according to claim 11, wherein the feedback information comprises the one-dimensional range profile of the sensed target.

14. The method according to claim 11, wherein the feedback information comprises a target frequency that is in a preset frequency set and that maximizes a receive power of the second signal, and the preset frequency set comprises a candidate frequency that is received from the transmitter and that is for the second signal.

15. The method according to any one of claims 11 to 14, wherein

the first signal is a wideband pulse signal; and
the second signal is a narrowband pulse signal.

16. The method according to claim 15, wherein the first signal is a polarized wideband pulse signal.

17. The method according to claim 16, wherein the feedback information comprises a polarized one-dimensional range profile of the sensed target and a corresponding polarization manner.

18. The method according to claim 16, wherein the feedback information comprises the target frequency that is in the preset frequency set and that maximizes the receive power of the second signal and a target polarization manner that is in a polarization manner set and that maximizes the receive power of the second signal, the preset frequency set comprises the candidate frequency that is received by the receiver from the transmitter and that is for the second signal, and the polarization manner set comprises a candidate polarization manner that is received by the receiver from the transmitter and that is for the second signal.

19. An electronic device, comprising:

at least one computing unit; and
at least one memory, wherein the at least one memory is coupled to the at least one computing unit and stores instructions for execution by the at least one computing unit, and when the instructions are executed by the at least one computing unit, the device is enabled to perform the method according to any one of claims 1 to 18.

20. A computer-readable storage medium, wherein the computer-readable storage medium stores a computer program, and when the program is executed by a processor, the method according to any one of claims 1 to 18 is implemented.

21. A computer program product, wherein the computer program product comprises computer-executable instructions, and when the computer-executable instructions are executed by a processor, a device is enabled to perform the method according to any one of claims 1 to 18.

100

FIG. 1

**101** Transmitter

**102** Receiver

202: First pulse signal

201 → 203

204: Determine a one-dimensional range profile of a target

206: Feedback information

207 ← 205

209: Second pulse signal

208 → 210

FIG. 2

**FIG. 3**

**FIG. 4**

101

Transmitter

102

Receiver

502: Wideband pulse signal

501

503

504: Pulse compression

505: Obtain a one-dimensional range profile of a target

506: Select a target frequency

508: Target frequency

509

507

511: Narrowband pulse signal

510

512

FIG. 5

101

Transmitter

102

Receiver

602: Polarized wideband pulse signal

601

603

604: Pulse compression

605: Obtain a horizontally/vertically polarized one-dimensional range profile of a target

607: One-dimensional range profile and polarization manner

608

606

609: Select a target frequency and a target polarization manner

611: Polarized narrowband pulse signal

610

612

FIG. 6

FIG. 7

FIG. 8

FIG. 9

Send a first pulse signal to a to-be-sensed target, where the first pulse signal is scattered by the target to generate a first echo signal, and the first echo signal is used by a receiver to determine a one-dimensional range profile of the target

Receive feedback information from the receiver, where the feedback information is generated based on the one-dimensional range profile

Send, to the target based on the feedback information, a second pulse signal whose bandwidth is less than that of the first pulse signal, where the second pulse signal is scattered by the target to generate a second echo signal, and the second echo signal is used by the receiver to sense the target

FIG. 10

1100

1110

Determine a one-dimensional range profile of a to-be-sensed target based on a first echo signal generated by scattering a first pulse signal by the target, where the first pulse signal is sent by a transmitter

1120

Send feedback information to the transmitter, where the feedback information is generated based on the one-dimensional range profile

1130

Sense the target based on a second echo signal generated by the target by scattering a second pulse signal sent by the transmitter, where a bandwidth of the second pulse signal is less than that of the first pulse signal

FIG. 11

1200

1240

1210

Communication interface

Processor

Memory

1220

RAM

1222

ROM

1224

1230

FIG. 12

## INTERNATIONAL SEARCH REPORT

| International application No. |
| --- |
| **PCT/CN2023/092079** |

### A. CLASSIFICATION OF SUBJECT MATTER

G01S13/04(2006.01)i

According to International Patent Classification (IPC) or to both national classification and IPC

### B. FIELDS SEARCHED

Minimum documentation searched (classification system followed by classification symbols)

IPC:G01S13/-

Documentation searched other than minimum documentation to the extent that such documents are included in the fields searched

Electronic data base consulted during the international search (name of data base and, where practicable, search terms used)

CNABS, CNTXT, ENTXTC, VEN: 华为, 罗嘉金, 彭晓辉, 于洋, 杨讯, 张平, 周保建, 第一, 第二, "第1", "第2", 雷达, 带宽, 宽带, 窄带, 发射, 脉冲, 回波, 散射, 反射, 目标, 感知, 识别, 探测, 物体, 距离扩展, 扩展目标, 距离像, 一维距离像, 功率, 极化, 极化方式, 频率, 噪声, 最大, radar, SAR, broadband, wide band, narrow, bandwidth, body, target?, object?, recog+, detect +, identif+, first, "1st", "2nd", sencond+, range profile

### C. DOCUMENTS CONSIDERED TO BE RELEVANT

| Category* | Citation of document, with indication, where appropriate, of the relevant passages | Relevant to claim No. |
| --- | --- | --- |
| X | US 9915727 B1 (L-3 COMMUNICATIONS SECURITY AND DETECTION SYSTEMS, INC.) 13 March 2018 (2018-03-13) description, columns 1-2, 4-5, and 9-10, and figures 1 | 1-2, 5-7, 11-13, 15-17, 19-21 |
| X | KR 20180004538 A (HYUNDAI AUTRON CO., LTD.) 12 January 2018 (2018-01-12) description, paragraphs 0001-0018 | 1-2, 5-7, 11-13, 15-17, 19-21 |
| A | CN 108646246 A (NATIONAL UNIVERSITY OF DEFENSE TECHNOLOGY OF PLA) 12 October 2018 (2018-10-12) entire document | 1-21 |
| A | CN 110244290 A (UNIVERSITY OF ELECTRONIC SCIENCE AND TECHNOLOGY OF CHINA) 17 September 2019 (2019-09-17) entire document | 1-21 |
| A | CN 113640764 A (AVIATION OPERATIONS SERVICE ACADEMY OF NAVAL AERONAUTICAL UNIVERSITY) 12 November 2021 (2021-11-12) entire document | 1-21 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 November 2023** | **23 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/092079**

### C.     DOCUMENTS CONSIDERED TO BE RELEVANT

| Category* | Citation of document, with indication, where appropriate, of the relevant passages | Relevant to claim No. |
|---|---|---|
| A | CN 114690183 A (BIT-SENSING JOINT-STOCK AGENCY) 01 July 2022 (2022-07-01) entire document | 1-21 |

Form PCT/ISA/210 (second sheet) (July 2022)

**INTERNATIONAL SEARCH REPORT**
Information on patent family members

International application No.

**PCT/CN2023/092079**

| Patent document cited in search report | | | Publication date (day/month/year) | Patent family member(s) | | | Publication date (day/month/year) |
|---|---|---|---|---|---|---|---|
| US | 9915727 | B1 | 13 March 2018 | None | | | |
| KR | 20180004538 | A | 12 January 2018 | KR | 101856063 | B1 | 09 May 2018 |
| CN | 108646246 | A | 12 October 2018 | CN | 108646246 | B | 14 July 2020 |
| CN | 110244290 | A | 17 September 2019 | None | | | |
| CN | 113640764 | A | 12 November 2021 | CN | 113640764 | B | 11 August 2023 |
| CN | 114690183 | A | 01 July 2022 | US | 2022206108 | A1 | 30 June 2022 |
| | | | | EP | 4253995 | A1 | 04 October 2023 |
| | | | | WO | 2022145502 | A1 | 07 July 2022 |

Form PCT/ISA/210 (patent family annex) (July 2022)